(19) Europäisches Patentamt
European Patent Office
Office européen des brevets

(11) EP 4 509 474 A1

(12) # EUROPEAN PATENT APPLICATION
published in accordance with Art. 153(4) EPC

(43) Date of publication:
**19.02.2025 Bulletin 2025/08**

(21) Application number: **23796843.3**

(22) Date of filing: **27.04.2023**

(51) International Patent Classification (IPC):
***C03C 3/066*** (2006.01) ***C03C 3/097*** (2006.01)
***C03C 3/093*** (2006.01) ***C03C 12/00*** (2006.01)
***C03C 17/30*** (2006.01)

(52) Cooperative Patent Classification (CPC):
**C03C 3/066; C03C 3/093; C03C 3/097; C03C 12/00; C03C 17/30**

(86) International application number:
**PCT/KR2023/005783**

(87) International publication number:
**WO 2023/211201 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.04.2022 KR 20220052384**

(71) Applicants:
- **LG Electronics Inc.**
  **Yeongdeungpo-gu**
  **Seoul 07336 (KR)**
- **Seoul National University R&DB Foundation**
  **Seoul 08826 (KR)**

(72) Inventors:
- **CHOI, Wongyu**
  **Seoul 08592 (KR)**
- **KIM, Young Seok**
  **Seoul 08592 (KR)**
- **LEE, Jong-Chan**
  **Seoul 08830 (KR)**
- **YOOK, Jin-Sol**
  **Seoul 06977 (KR)**
- **LEE, Si-Young**
  **Seoul 08832 (KR)**
- **SEO, Hui-Ran**
  **Seoul 08792 (KR)**

(74) Representative: **Vossius & Partner**
**Patentanwälte Rechtsanwälte mbB**
**Siebertstrasse 3**
**81675 München (DE)**

(54) **HIGHLY HEAT-RESISTANT ANTIBACTERIAL GLASS COMPOSITION, PREPARATION METHOD THEREFOR, AND INJECTION MOLDED PRODUCT USING SAME**

(57) Disclosed are a non-eluting antibacterial glass composition and an antibacterial glass powder preparation method using same, the composition being formed from ingredients that are harmless to the human body, and having high heat resistance and high water fastness, thereby maintaining a semipermanent antibacterial function. In addition, the present invention relates to a novel antibacterial glass composition into which a glass powder comprising, as a main ingredient, SiO2, which is a glass former, and comprising ZnO and SnO as antibacterial components, and a silane coupling agent having a cationic functional group are introduced.

[Fig 1]

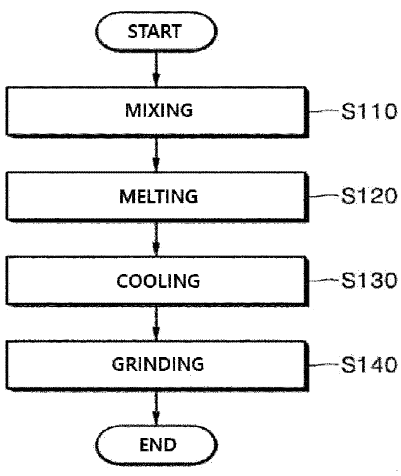


EP 4 509 474 A1

## Description

## FIELD

The present disclosure relates to a highly heat-resistant antibacterial glass composition, a method for preparing the same, and an injection-molded product using the same.

## DESCRIPTION OF RELATED ART

Microorganisms such as germs, fungi, and bacteria are ubiquitous in our living spaces such as sinks, refrigerator shelves, and washing machines. When the microorganisms enter the human body, they may cause life-threatening infections.

In this way, various types of germs may exist depending on the environment. However, Pseudomonas aeruginosa is a major problem in humid environments with frequent contact with water, etc. Since Pseudomonas aeruginosa can grow even under the lowest nutritional conditions, its growth range is very wide. In particular, various types of microorganisms exist everywhere in humid environments in hospitals, medical devices, and even disinfectant solution storage containers. This is also a major cause of biofilm formation.

Therefore, an antibacterial glass composition that may control the spread of microorganisms is required in household items such as washbasins, refrigerator shelves, ovens, and washing machines, as well as furniture, medical devices, and disinfectant solution storage containers in hospitals.

A conventional antibacterial glass composition includes a glass composed of a water-insoluble glass structure and ionic or crystalline components that are eluted or released for the purpose of antibacterial properties.

As a result, in order for the conventional antibacterial glass composition to exhibit the antibacterial activity, the ionic or crystalline components that exhibit the antibacterial activity should be eluted or released, and therefore, the long-term sustainability of the antibacterial activity is limited, and there is a safety issue when the conventional antibacterial glass composition is applied to an injection-molded product that comes into contact with drinking water.

Furthermore, the conventional antibacterial glass composition has a mechanism in which Ag is eluted to maintain the antibacterial activity. Ag has excellent antibacterial ability. However, when Ag is exposed to light for a long period of time, the injection-molded product may be discolored by Ag. Therefore, the conventional antibacterial glass composition has limitations in application thereof to various environments.

## DISCLOSURE

## TECHNICAL PURPOSES

A purpose of the present disclosure is to provide an antibacterial glass composition that is highly heat-resistant and has non-elution via control of components thereof and contents thereof.

In addition, a purpose of the present disclosure is to provide an antibacterial glass composition that is composed of components that are harmless to the human body and is highly heat-resistant and has high water resistance, thereby maintaining the antibacterial ability semi-permanently.

Furthermore, a purpose of the present disclosure is to secure the antibacterial activity that may effectively eliminate Pseudomonas aeruginosa as a major pathogen in a humid environment where water exists.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims and combinations thereof.

## TECHNICAL SOLUTIONS

An antibacterial glass composition according to the present disclosure comprises an antibacterial glass powder having a novel composition and a silane coupling agent having a cationic functional group, such that the composition is highly heat-resistant and water-resistant, and may also maintain a semi-permanent antibacterial function.

More specifically, the antibacterial glass composition according to the present disclosure includes: antibacterial glass powders; and a silane coupling agent having a cationic functional group, wherein the antibacterial glass powders contain: 26 to 50 wt% of $SiO_2$; 0.5 to 4 wt% of at least one of $B_2O_3$ and $P_2O_5$; 15 to 27 wt% of both of $Na_2O$ and $K_2O$; 3 to 20 wt% of at least one of CaO, MgO, and $WO_3$; and 22 to 44 wt% of at least one of ZnO and SnO, based on 100 wt% of the antibacterial glass powders.

In the antibacterial glass composition according to the present disclosure, the antibacterial activity is not exhibited as the antibacterial agent decomposes. Rather, the antibacterial glass composition has a mechanism in which metal ions having the antibacterial activity allow surface charges of the glass to be positively charged which attract bacteria having negative charges, thereby preventing the bacteria from growing, so that the semi-permanent antibacterial activity may be secured.

As a result, when the antibacterial glass composition of the present disclosure is utilized as an additive for plastic injection molding, the antibacterial glass composition may not only have excellent antibacterial activity against Escherichia coli and Staphylococcus aureus, but also effectively remove Pseudomonas aeruginosa as a major pathogen in a humid environment where water exists.

## TECHNICAL EFFECTS

The antibacterial glass composition according to the present disclosure is made of ingredients that are harmless to the human body, and is highly heat-resistant and water-resistant, so that the composition may maintain the antibacterial function semi-permanently.

In addition, the antibacterial glass composition according to the present disclosure includes $SiO_2$ as a glass former as a main component. Thus, the metal ion having the antibacterial property added to the glass causes the surface charge (zeta potential) of the glass to be positive. Thus, the positive charge may attract the bacteria that normally have a negative charge to create a charge atmosphere in which bacteria cannot grow, thereby killing the bacteria.

As a result, when the antibacterial glass composition having non-elution of the present disclosure is applied as an additive to a plastic injection-molded product, the antibacterial glass composition may not only have excellent antibacterial activity against E. coli and Staphylococcus aureus, but also effectively remove Pseudomonas aeruginosa as a major pathogen in a humid environment where water exists.

In addition, the antibacterial glass composition according to the present disclosure has a form in which the above-mentioned inorganic antibacterial glass and an antibacterial organic substance bind to each other. Thus, the antibacterial glass composition according to the present disclosure has high thermal stability and long-lasting properties, while complementing the slow antibacterial instantaneous effect as a disadvantage of the inorganic antibacterial agent.

In addition to the effects as described above, specific effects of the present disclosure are described together with the specific details for carrying out the disclosure below.

## BRIEF DESCRIPTION OF DRAWINGS

FIG. 1 is a process flowchart showing a method for preparing antibacterial glass powders having non-elution according to an embodiment of the present disclosure.

## DETAILED DESCRIPTIONS

The above-mentioned purposes, features, and advantages will be described in detail later with reference to the attached drawings, so that those skilled in the art in the technical field to which the present disclosure belongs may easily practice the technical ideas of the present disclosure. In describing the present disclosure, when it is determined that a detailed description of the publicly known technology related to the present disclosure may unnecessarily obscure the gist of the present disclosure, the detailed description thereof will be omitted. Hereinafter, a preferred embodiment according to the present disclosure will be described in detail with reference to the attached drawings. In the drawings, identical reference numerals are used to indicate identical or similar components.

As used herein, singular expressions include plural expressions, unless the context clearly dictates otherwise. In the present application, terms such as "composed of" or "include" should not be construed as necessarily including all of various components or steps described herein, and should be interpreted as being able to not including some of the components or the steps and further including additional components or steps.

Hereinafter, a novel antibacterial glass composition having high heat-resistance and a method for preparing antibacterial glass powders using the same according to some embodiments of the present disclosure are described.

An antibacterial glass composition of the present disclosure has secured semi-permanent sustainability of the antibacterial activity by controlling components of the antibacterial glass composition and contents thereof so as to have non-dissolution property.

Furthermore, the antibacterial glass composition may be composed of components harmless to the human body and has high heat resistance and high water resistance, and thus may maintain the antibacterial function semi-permanently.

In addition, in the antibacterial glass composition having non-elution according to an embodiment of the present disclosure, the antibacterial activity is not exhibited as the antibacterial agent decomposes. Rather, the antibacterial glass

composition has a mechanism in which metal ions having the antibacterial activity allow surface charges of the glass to be positively charged which attract bacteria having negative charges, thereby preventing the bacteria from growing, so that the semi-permanent antibacterial activity may be secured.

As a result, when the antibacterial glass composition having non-elution according to an embodiment of the present disclosure is utilized as an additive to the plastic injection-molded product, the antibacterial glass composition may not only have excellent antibacterial activity against Escherichia coli and Staphylococcus aureus, but also effectively remove Pseudomonas aeruginosa as a major pathogen in a humid environment where water exists.

In addition, since the antibacterial glass composition according to an embodiment of the present disclosure has a form in which the above-described inorganic antibacterial glass and antibacterial organic substances bind to each other, the antibacterial glass composition has high thermal stability and long-lasting properties, while complementing the slow antibacterial instantaneous effect as a disadvantage of the inorganic antibacterial agent.

To this end, the antibacterial glass composition according to some embodiments of the present disclosure includes: antibacterial glass powders; and a silane coupling agent having a cationic functional group, wherein the antibacterial glass powders contain: 26 to 50 wt% of $SiO_2$; 0.5 to 4 wt% of at least one of $B_2O_3$ and $P_2O_5$; 15 to 27 wt% of both of $Na_2O$ and $K_2O$; 3 to 20 wt% of at least one of CaO, MgO, and $WO_3$; and 22 to 44 wt% of at least one of ZnO and SnO, based on 100 wt% of the antibacterial glass powders.

In this regard, in order for the antibacterial glass composition according to some embodiments of the present disclosure to become glass, a glass former is essentially included therein. Furthermore, in order for the glass to be easily formed under a condition for melting the glass (approximately 900 to 1600°C), a modified oxide is included therein to melt the glass former in a homogeneous and amorphous form.

The most commonly commercially used glass formers are $SiO_2$, $B_2O_3$, and $P_2O_5$. The glass composed of a large amount of $B_2O_3$ and $P_2O_5$ has strong hygroscopicity, and a large amount of OH groups derived from moisture in the air are adsorbed on a surface thereof, resulting in a negative surface charge. This acts as a factor that inhibits the antibacterial activity of the glass.

Therefore, the present disclosure provides a novel silicate-based antibacterial glass composition that intentionally contains a smaller amount of of $B_2O_3$ and $P_2O_5$ and has $SiO_2$ as a glass former as a main component of the composition.

The antibacterial glass powders included in the antibacterial glass composition of the present disclosure contains 26 to 50 wt% of $SiO_2$, and 0.5 to 4 wt% of at least one of $B_2O_3$ and $P_2O_5$.

$SiO_2$ is a glass-former that enables vitrification and is a key component that plays a role in the structural framework of glass. Furthermore, $SiO_2$ does not act as a direct component that exerts the antibacterial power, but is advantageous in forming a smaller amount of OH groups on the glass surface, compared to $P_2O_5$ as a representative glass-former, thereby causing the glass surface to be positively charged due to metal ions in the glass.

The $SiO_2$ may be added at a content of 26 to 50 wt% based on 100 wt% of the antibacterial glass powders according to the present disclosure. When $SiO_2$ is added in a large amount exceeding 50 wt%, the viscosity increases when the glass is melted, such that there is a problem that workability and yield are reduced during a cooling process. On the contrary, when $SiO_2$ is added in an amount smaller than 26 wt%, the structure of the glass is weakened, which causes a problem in that the water resistance is reduced.

On the other hand, the glass composed of a large amount of $B_2O_3$ and $P_2O_5$ has strong hygroscopicity, such that a lot of OH groups derived from moisture in the air are adsorbed on the surface of the glass, so that the surface charge becomes negative. This acts as a factor that inhibits the antibacterial activity of the glass. Therefore, according to the present disclosure, a novel antibacterial glass composition that has $B_2O_3$ and $P_2O_5$ at a minimum content and has $SiO_2$ as the glass former as the main component of the glass composition.

In other words, $SiO_2$ plays a role in strengthening the structure of the glass. However, when $SiO_2$ is used as a single component as a glass former, the viscosity becomes too high when being melted, so that a very high melting temperature is required to produce homogeneous glass. Therefore, a small amount of $B_2O3$ and $P2O_5$ are added within a range in which the addition does not weaken the water resistance of the glass, such that the viscosity of the melt may be reduced, and the workability and yield of the glass production may be improved.

Accordingly, the antibacterial glass powders of the present disclosure contain 0.5 to 4 wt% of at least one of $B_2O_3$ and $P_2O_5$.

When at least one of $B_2O_3$ and $P_2O_5$ is added in a large amount exceeding 4 wt%, the water resistance of the glass may be reduced and $B_2O_3$ and $P_2O_5$ may easily be dissolved and released in water. Conversely, when at least one of $B_2O_3$ and $P_2O_5$ is added in an amount smaller than 0.5 wt%, the workability and yield of the glass production may be reduced.

Alkali oxides such as $Na_2O$ and $K_2O$ are oxides that act as a network modifier that forms a non-crosslinking bond in the glass composition. Each of these components alone cannot achieve vitrification. However, when each of these components is mixed with a glass former such as $SiO_2$ and $B_2O_3$ at a predetermined content, the vitrification becomes possible. When only one of the above components is included in the glass composition, the durability of the glass may be

weakened within the vitrification possible range. However, when the two components are included in the glass composition together, the durability of the glass is improved again depending on the contents thereof. This is called the mixed alkali effect.

Therefore, $Na_2O$ and $K_2O$ are added in a content of 15 to 27 wt% based on 100 wt% of the antibacterial glass powders according to the present disclosure. When both of $Na_2O$ and $K_2O$ are added in a large amount exceeding 27 wt%, the thermal properties of the glass composition may be deteriorated. Conversely, when both of $Na_2O$ and $K_2O$ are added in a content smaller than 15 wt%, it is difficult to control the hydration of components such as ZnO, which may deteriorate the antibacterial properties.

Further, preferably, the content of $Na_2O$ and the content of $K_2O$ may satisfy the following relationship:

[Relationship]

$$0.5 \leq (\text{content of } Na_2O)/(\text{content of } K_2O) \leq 1.5$$

When the content of $Na_2O$ and the content of $K_2O$ do not satisfy the above relationship, the melting point lowering effect through the eutectic point may be reduced, thereby making it difficult to vitrify the antibacterial glass composition.

Next, the antibacterial glass powders of the present disclosure contain 3 to 20 wt% of at least one of CaO, MgO, and $WO_3$, based on 100 wt% of the antibacterial glass powders.

At least one of CaO, MgO, and $WO_3$ are oxides that act as a network modifier that forms a non-crosslinking bond in the glass composition in a similar manner to alkali oxides. When one or more of CaO, MgO, and $WO_3$ is added in an amount exceeding 20 wt%, the thermal properties of the glass composition may deteriorate. On the contrary, when one or more of CaO, MgO, and $WO_3$ is added in an amount smaller than 3 wt%, the glass structure may be weakened, resulting in reduced durability and reduced antibacterial performance.

Next, the antibacterial glass powders of the present disclosure contain at least one of ZnO and SnO as a component that exhibits antibacterial performance.

At least one of ZnO and SnO is included in an amount of 22 to 44 wt% based on 100 wt% of the antibacterial glass powders according to the present disclosure. When at least one of ZnO and SnO is added in an amount smaller than 22 wt%, it is difficult to exhibit antibacterial properties of the glass composition. On the contrary, when at least one of ZnO and SnO is added in an amount exceeding 44 wt%, the durability or thermal properties of the glass composition may deteriorate. Preferably, the ZnO may be added in an amount of 30 wt% or larger, based on 100 wt% of the antibacterial glass powders according to the present disclosure.

A conventional antibacterial composition includes various antibacterial components such as Ag and Ag oxide to exhibit antibacterial activity (coverage against various bacteria). However, the injection-molded product to which the Ag component has been applied exhibits color change when being exposed to light for a long period of time. Thus, the composition according to the present disclosure exhibits the antibacterial activity using Zn and Sn without including Ag and Ag oxide, thereby suppressing the above-mentioned side effect. Preferably, the antibacterial glass composition of the present disclosure does not contain Ag, Ag oxide. However, the antibacterial glass composition of the present disclosure may contain $Ag_3PO_4$ or AgNOs at 0.1 wt% or smaller based on 100 wt% of the antimicrobial glass powder, when necessary.

Next, the antibacterial glass composition according to the present disclosure includes the silane coupling agent having the cationic functional group in addition to the antimicrobial glass powders as described above.

In this regard, the cationic functional group may include at least one selected from a quaternary ammonium salt, an imidazolium group, a piperidinium group, a morpholinium group, a pyridinium group, and a pyrrolidinium group.

In addition, the silane coupling agent may include at least one of γ-aminopropyl trimethoxysilane, γ-aminopropyl triethoxy silane, γ-glycidoxy propyl trimethoxy silane, γ-glycidoxy propyl trimethoxysilane, γ-mercapto propyl trimethoxy silane, γ-mercapto propyl triethoxy silane, and a silane coupling agent represented by a following Chemical Formula:

[Chemical Formula] $RO(CH_2CHO)_nCH_2CH_2CH_2CSi(OR')_3$

where R is a methyl group, an ethyl group, or hydrogen, R' is a methyl group or an ethyl group, and n is an integer from 1 to 10.

In this way, the antibacterial glass composition according to the present disclosure includes the antimicrobial glass powders as the inorganic antimicrobial agent, and further includes the silane coupling agent having the cationic functional group to maximize the performance of the antimicrobial glass powders. More specifically, the silane coupling agent having the cationic functional group binds to the surface of the antimicrobial glass powder. The cationic functional

group interacts with the cell membrane of the negatively charged bacteria to exhibit antimicrobial properties. In addition, when the antibacterial glass composition of the present disclosure is applied to a polymer, this may advantageously improve the mechanical properties and dispersibility of the polymer. The silane coupling agent is used as an intermediate connecting the antibacterial inorganic material (the glass powders) and the organic material (the cationic functional group) to each other.

The silane coupling agent having the cationic functional group may preferably be contained in an amount of 0.1 to 20 parts by weight, most preferably in an amount of 0.1 to 5 parts by weight, based on 100 parts by weight of the antibacterial glass powders.

Hereinafter, with reference to the attached drawings, a method for preparing an antibacterial glass composition according to an embodiment of the present disclosure will be described.

FIG. 1 is a process flowchart showing a method for preparing an antibacterial glass composition according to an embodiment of the present disclosure.

As illustrated in FIG. 1, the method for preparing the antibacterial glass composition according to an embodiment of the present disclosure includes a mixing step S110, a melting step S120, a cooling step S130, and a pulverizing step S140.

Mixing

In the mixing step S110, first, the antibacterial glass powders is prepared, wherein the antibacterial glass powders contain: 26 to 50 wt% of $SiO_2$; 0.5 to 4 wt% of at least one of $B_2O_3$ and $P_2O_5$; 15 to 27 wt% of both of $Na_2O$ and $K_2O$; 3 to 20 wt% of at least one of CaO, MgO, and $WO_3$; and 22 to 44 wt% of at least one of ZnO and SnO, based on 100 wt% of the antibacterial glass powders.

The preferred composition ratio of the antibacterial glass powders is as described above.

Melting

In the melting step S120, the antibacterial glass powders are melted.

In this step, it is preferable that the melting is performed at 1,100 to 1,400°C for 1 to 60 minutes. When the melting temperature is smaller than 1,200°C or the melting time is smaller than 1 minute, the antibacterial glass powders are not completely dissolved, which causes the glass melt to become immiscible. On the contrary, when the melting temperature exceeds 1,300°C or the melting time exceeds 60 minutes, it is not economical because excessive energy and time are required.

Cooling

In the cooling step in S130, the molten antibacterial glass powders are cooled down to room temperature.

In this step, it is preferable that the cooling is performed in a furnace. When air cooling or water cooling is applied, the internal stress of the antibacterial glass is excessive generated, which may cause cracks in some cases. For this reason, the cooling in the furnace is preferable.

Pulverizing

In the pulverizing step in S140, the cooled antibacterial glass is pulverized. At this time, it is preferable to use a dry pulverizing means for the pulverizing process. For example, a ball mill process or a jet mill process may be used using the dry pulverizing means. In this pulverizing process, the silane coupling agent having the cationic functional group is added to the antibacterial glass powders.

Via the above-described pulverizing, the antibacterial glass is finely pulverized to particles, such that the antibacterial glass composition including the antibacterial glass powders and the silane coupling agent having the cationic functional group is prepared. It is preferable that the antibacterial glass composition has an average diameter of 30 $\mu$m or smaller. A more preferable range of the average diameter thereof is in a range of 15 to 25 $\mu$m.

The antibacterial glass composition according to an embodiment of the present disclosure may be prepared in the above process S110 to S140.

Examples

Hereinafter, the configuration and the effect of the present disclosure will be described in more detail based on a preferred example of the present disclosure. However, this is presented as a preferred implementation of the present disclosure and cannot be interpreted as limiting the present disclosure in any way.

Since the contents not described here may be sufficiently technically inferred by a person skilled in the art, the description thereof will be omitted.

### 1. Preparing an antibacterial glass composition

Present Example and Comparative Example

The antibacterial glass composition having the composition described in Table 1 was melted in an electric furnace at a temperature of 1,250°C, and then a quenching twin roll was used to cool the melted antibacterial glass composition to obtain a cullet having a thickness of 1 mm or smaller.

In this regard, the raw materials of $Na_2O$, $K_2O$, and CaO were $Na_2CO_3$, $K_2CO_3$, and $CaCO_3$, respectively, and the remaining components were the same as those described in Table 1. Vitrification was classified into a case where the glassy state is homogeneous and a case where opalescence/unmelted substance occurs.

The prepared glass was ground with a dry pulverizing means (ball mill or jet mill) to prepare powders with an average particle size of 3 to 6 $\mu$m.

Next, the silane coupling agent with the cationic functional group was prepared.

For synthesis with the cationic functional group, 3-chloropropyltrimethoxysilane was used as the silane coupling agent. In order to synthesize imidazolium with the silane coupling agent, the synthesis was performed at a molar ratio of 1:1.2 at 130°C for 24 hours in a toluene atmosphere, and a following substance was prepared.

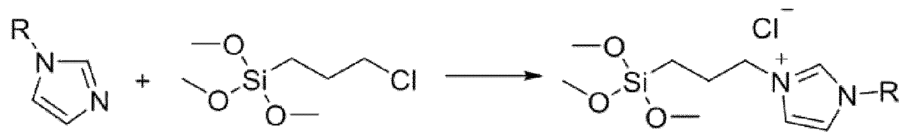

Next, for the synthesis of quaternary ammonium salt and silane coupling agent, 3-chloropropyltrimethoxysilane and dimethyl butyl amine were synthesized with each other at a molar ratio of 1:0.909 in an atmosphere of 90°C for 24 hours to prepare a following substance:

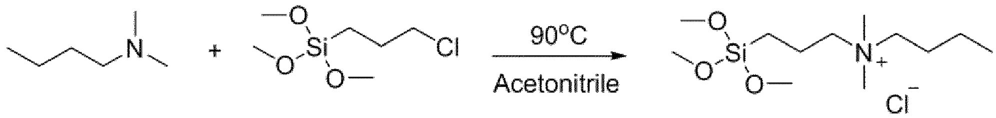


Thereafter, the antibacterial glass powders prepared as above and the silane coupling agent having the cationic functional group were synthesized with each other.

The antibacterial glass powders and the silane coupling agent having the cationic functional group were pulverized and mixed with each other for a long time, and then the mixture was heat-treated at 120°C for 24 hours to physically and chemically bond the antibacterial glass powders and the silane coupling agent having the cationic functional group to each other.

Table 1 as set forth below shows whether vitrification is achieved, and the content of the silane coupling agent in Present Example and Comparative Example. Present Examples 1 and 2 employed the silane coupling agent using imidazolium, and Present Examples 3 and 4 and Comparative Example 2 employed the silane coupling agent using quaternary ammonium salt.

[Table 1]

| Examples | Present Example 1 | Present Example 2 | Present Example 3 | Present Example 4 | Comparative Example 1 | Comparative Example 2 |
|---|---|---|---|---|---|---|
| $SiO_2$ | 35.1 | 35.0 | 35.1 | 35.1 | 53 | 53 |
| $P_2O_5$ | 0 | 0.1 | 0 | 0 | 4 | 4 |
| $B_2O_3$ | 2 | 2 | 2 | 2 | 0 | 0 |
| $Na_2O$ | 9.6 | 9.6 | 9.6 | 9.6 | 15 | 15 |
| K2O | 9.6 | 9.6 | 9.6 | 9.6 | 0 | 0 |
| $WO_3$ | 0 | 0 | 0.1 | 0 | 0 | 0 |

(continued)

| Examples | Present Example 1 | Present Example 2 | Present Example 3 | Present Example 4 | Comparative Example 1 | Comparative Example 2 |
|---|---|---|---|---|---|---|
| CaO | 4.3 | 4.3 | 4.2 | 4.2 | 18 | 18 |
| MgO | 0 | 0 | 0 | 0.1 | 0 | 0 |
| SnO | 0 | 0.4 | 0 | 0 | 0 | 0 |
| ZnO | 39.4 | 39.0 | 39.4 | 39.4 | 10 | 10 |
| Total | 100 | 100 | 100 | 100 | 100 | 100 |
| **[00117]** (Unit: wt%) | | | | | | |

[Table 2]

| Examples | Present Example 1 | Present Example 2 | Present Example 3 | Present Example 4 | Comparative Example 1 | Comparative Example 2 |
|---|---|---|---|---|---|---|
| Whether vitrification is achieved? | O | O | O | O | O | O |
| Silane coupling agent with cationic functional group (relative toaweightof antibacterial glass powders) | 0.1 | 02 | 0.5 | 5.0 | 0 | 5.0 |
| Content of antibacterial glass powders in composite (wt%) | 1.0 | 1..0 | 1.0 | 0.5 | 1.0 | 1.0 |

**2. Manufacturing of injection-molded specimen**

Present Example and Comparative Example

The antibacterial glass composition prepared as above was mixed with polypropylene pellets to prepare a mixture which in turn was pressure-injected to manufacture an injection-molded specimen. The injection-molded specimen was cut into a size of 200 mm x 100 mm x 3 mm (thickness). Table 3 shows a content of the antibacterial glass powders in the above injection-molded specimen.

[Table 3]

| Examples | Present Example 1 | Present Example 2 | Present Example 3 | Present Example 4 | Comparative Example 1 | Comparative Example 2 |
|---|---|---|---|---|---|---|
| Content of antibacterial glass powders (weight%) in injection-molded specimen | 1.0 | 1..0 | 1.0 | 0.5 | 1.0 | 1.0 |

**3. Antibacterial performance and durability evaluation of injection-molded specimen**

(1) Antibacterial performance evaluation

In order to evaluate the performance of the antibacterial agent itself, the antibacterial test method (ASTM-E2149) was modified to measure the number of bacteria for 20 minutes, 1 hour, and 3 hours using 1/10 (0.2 g) of a sample amount used in the existing experiment, and an accurate performance evaluation was performed.

In a specimen (Reference Example) to which only antibacterial glass powders were applied, the number of viable bacteria reached 0 in 3 hours during the antibacterial performance evaluation. However, in the specimens (Present Examples 1 to 4) to which the silane coupling agent having the cationic functional group and the antibacterial glass powders were applied, the number of viable bacteria reached 0 in 1 hour during the antibacterial performance evaluation.

Next, Table 4 shows the results of measuring the antibacterial performances of the injection-molded specimens manufactured according to Present Example and Comparative Example. In this regard, in order to check the antibacterial activity of each injection-molded specimen, the antibacterial activity values against Staphylococcus aureus and Escherichia coli were measured using a film adhesion method of JIS Z 2801 as an antibacterial standard test method.

[Table 4]

| Examples | | Present Example 1 | Present Example 2 | Present Example 3 | Present Example4 | Comparative Example 1 | Comparative Example 2 |
|---|---|---|---|---|---|---|---|
| Antibacterial activity (JIS Z 2801, film adhesion method) | Staphylococcus aureus | 99.99 | 99.99 | 99.99 | 99.99 | 90.00 | 99.99 |
| | Escherichi a coli | 99.9999 | 99.9999 | 99.9999 | 99.9999 | 90.00 | 99.99 |

As described in Table 4, it may be identified that all of the injection-molded specimens manufactured according to Present Examples have superior antibacterial activity compared to the specimens according to Comparative Examples.

Based on the experimental results above, it may be identified that the antibacterial activity of the antibacterial glass powders with the cationic functional group is superior to that of the antibacterial glass powders itself. Further, it may be also identified that the injection-molded specimen manufactured according to the Present Example exhibits superior antibacterial activity to the injection-molded specimen manufactured according to the Comparative Example.

**(2) Photochromic Evaluation**

In a photochromic test, the discoloration amounts of the above specimens after irradiating the above specimens with UV A/B for 96 hours were measured using a colorimeter (Minolta CR-400).

A color difference ($\Delta E$) before and after UV irradiation of a basic injection-molded product (Reference Example) free of the antibacterial glass was 1 or greater. However, a color difference ($\Delta E$) before and after UV irradiation of each of the injection-molded products of Present Examples was smaller than 1.

Although the present disclosure has been described with reference to the accompanying drawings, the present disclosure is not limited by the embodiments disclosed herein and the drawings, and it is obvious that various modifications may be made by those skilled in the art within the scope of the technical idea of the present disclosure. In addition, although the effects based on the configuration of the present disclosure are not explicitly described and illustrated in the description of the embodiment of the present disclosure above, it is natural that predictable effects from the configuration should also be recognized.

## Claims

**1.** An antibacterial glass composition comprising:

antibacterial glass powders; and
a silane coupling agent having a cationic functional group,
wherein the antibacterial glass powders contain:

26 to 50 wt% of $SiO_2$;
0.5 to 4 wt% of at least one of $B_2O_3$ and $P_2O_5$;
15 to 27 wt% of both of $Na_2O$ and $K_2O$;
3 to 20 wt% of at least one of CaO, MgO, and $WO_3$; and
22 to 44 wt% of at least one of ZnO and SnO,
based on 100 wt% of the antibacterial glass powders.

**2.** The antibacterial glass composition of claim 1, wherein a content of the $Na_2O$ and a content of the $K_2O$ satisfy a following relationship:

[Relationship]

$$0.5 \leq (\text{content of } Na_2O)/(\text{content of } K_2O) \leq 1.5$$

**3.** The antibacterial glass composition of claim 1, wherein the antibacterial glass powders further contain Ag or an oxide including Ag at a content of 0.1 wt% or smaller, based on 100 wt% of the antibacterial glass powders.

**4.** The antibacterial glass composition of claim 1, wherein the antibacterial glass powders contain the ZnO at a content of 30 wt% or larger, based on 100 wt% of the antibacterial glass powders.

**5.** The antibacterial glass composition of claim 1, wherein the cationic functional group includes at least one selected from a quaternary ammonium salt, an imidazolium group, a piperidinium group, a morpholinium group, a pyridinium group, and a pyrrolidinium group,

wherein the silane coupling agent includes at least one selected from γ-aminopropyl trimethoxysilane, γ-aminopropyl triethoxy silane, γ-glycidoxy propyl trimethoxy silane, γ-glycidoxy propyl trimethoxysilane, γ-mercapto propyl trimethoxy silane, γ-mercapto propyl triethoxy silane, and a silane coupling agent represented by a following Chemical Formula:

[Chemical Formula] $RO(CH_2CHO)_nCH_2CH_2CH_2CSi(OR')_3$

where R is a methyl group, an ethyl group, or hydrogen, R' is a methyl group or an ethyl group, and n is an integer from 1 to 10.

**6.** The antibacterial glass composition of claim 1, wherein the antibacterial glass composition contains the silane coupling agent having the cationic functional group at a content of 0.1 to 20 parts by weight, based on 100 parts by weight of the antibacterial glass powders.

**7.** A method for preparing an antibacterial glass composition, the method comprising:

preparing antibacterial glass powders such that the antibacterial glass powders contain:

26 to 50 wt% of $SiO_2$;
0.5 to 4 wt% of at least one of $B_2O_3$ and $P_2O_5$;
15 to 27 wt% of both of $Na_2O$ and $K_2O$;
3 to 20 wt% of at least one of CaO, MgO, and $WO_3$; and
22 to 44 wt% of at least one of ZnO and SnO,
based on 100 wt% of the antibacterial glass powders;

melting the antibacterial glass powders;
cooling the melted antibacterial glass powders; and
adding a silane coupling agent having a cationic functional group to the cooled antibacterial glass powders, and pulverizing the cooled antibacterial glass powders to prepare the antibacterial glass composition.

**8.** The method for preparing the antibacterial glass composition of claim 7, wherein a content of the $Na_2O$ and a content of the $K_2O$ satisfy a following relationship:

[Relationship]

$$0.5 \leq (\text{content of } Na_2O)/(\text{content of } K_2O) \leq 1.5$$

**9.** The method for preparing the antibacterial glass composition of claim 7, wherein the antibacterial glass powders further contain Ag or an oxide including Ag at a content of 0.1 wt% or smaller, based on 100 wt% of the antibacterial glass powders.

**10.** The method for preparing the antibacterial glass composition of claim 7, wherein the antibacterial glass powders contain the ZnO at a content of 30 wt% or larger, based on 100 wt% of the antibacterial glass powders.

**11.** The method for preparing the antibacterial glass composition of claim 7, wherein the cationic functional group includes at least one selected from a quaternary ammonium salt, an imidazolium group, a piperidinium group, a morpholinium group, a pyridinium group, and a pyrrolidinium group,

wherein the silane coupling agent includes at least one selected from γ-aminopropyl trimethoxysilane, γ-aminopropyl triethoxy silane, γ-glycidoxy propyl trimethoxy silane, γ-glycidoxy propyl trimethoxysilane, γ-mercapto propyl trimethoxy silane, γ-mercapto propyl triethoxy silane, and a silane coupling agent represented by a following Chemical Formula:

[Chemical Formula] $RO(CH_2CHO)_nCH_2CH_2CH_2CSi(OR')_3$

where R is a methyl group, an ethyl group, or hydrogen, R' is a methyl group or an ethyl group, and n is an integer from 1 to 10.

**12.** The method for preparing the antibacterial glass composition of claim 7, wherein the antibacterial glass composition contains the silane coupling agent having the cationic functional group at a content of 0.1 to 20 parts by weight, based on 100 parts by weight of the antibacterial glass powders.

[Fig 1]

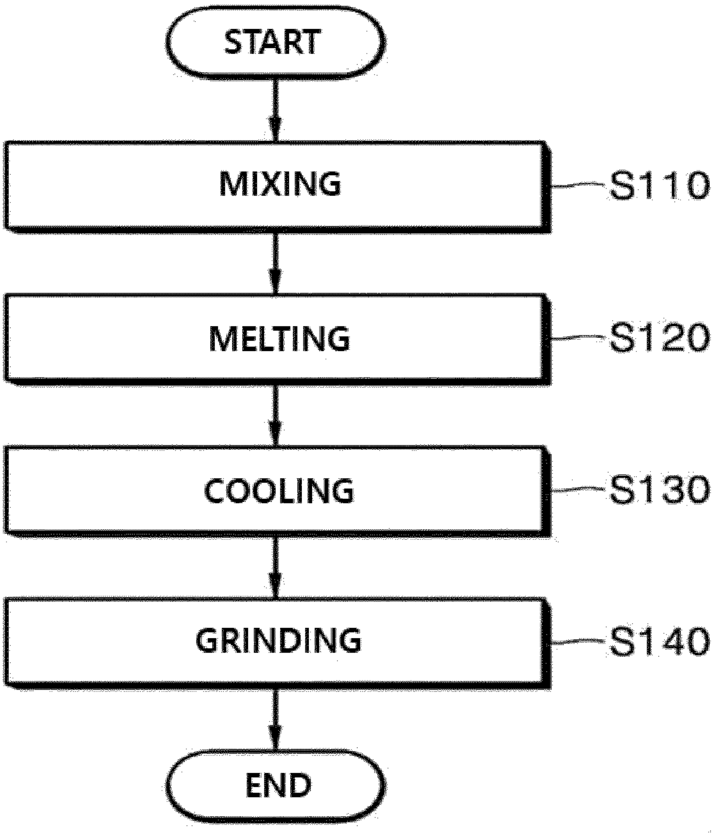
START
MIXING
S110
MELTING
S120
COOLING
S130
GRINDING
S140
END

## INTERNATIONAL SEARCH REPORT

International application No.
**PCT/KR2023/005783**

**A. CLASSIFICATION OF SUBJECT MATTER**

**C03C 3/066**(2006.01)i; **C03C 3/097**(2006.01)i; **C03C 3/093**(2006.01)i; **C03C 12/00**(2006.01)i; **C03C 17/30**(2006.01)i

According to International Patent Classification (IPC) or to both national classification and IPC

**B. FIELDS SEARCHED**

Minimum documentation searched (classification system followed by classification symbols)

C03C 3/066(2006.01); A01N 59/08(2006.01); A01N 59/16(2006.01); A23L 3/358(2006.01); C03C 3/068(2006.01); C03C 8/02(2006.01); C03C 8/04(2006.01); C09D 201/02(2006.01); C09D 4/02(2006.01); C09D 7/12(2006.01); C09K 3/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 항균 유리 분말(antibacterial glass powder), 양이온성 작용기(cationic functional group), 실란 커플링제(silane coupling agent)

**C. DOCUMENTS CONSIDERED TO BE RELEVANT**

| Category* | Citation of document, with indication, where appropriate, of the relevant passages | Relevant to claim No. |
|---|---|---|
| Y | JP 2005-500972 A (CARL ZEISS STIFFUNG) 13 January 2005 (2005-01-13)<br>See claims 1 and 13; and paragraphs [0015] and [0048]. | 1-12 |
| Y | KR 10-2005-0094457 A (TOAGOSEI CO., LTD.) 27 September 2005 (2005-09-27)<br>See claim 1; and pages 5-8. | 1-12 |
| Y | JP 2017-025120 A (ASAHI GLASS CO., LTD.) 02 February 2017 (2017-02-02)<br>See claims 1, 5 and 14-15; and paragraphs [0028] and [0083]-[0085]. | 1-12 |
| A | JP 2006-520311 A (SCHOTT AG) 07 September 2006 (2006-09-07)<br>See entire document. | 1-12 |
| A | JP 2021-143318 A (LIXIL CORP.) 24 September 2021 (2021-09-24)<br>See entire document. | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 August 2023** | **07 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/005783**

| Patent document cited in search report | Publication date (day/month/year) | Patent family member(s) | Publication date (day/month/year) |
|---|---|---|---|
| JP 2005-500972 A | 13 January 2005 | EP 1419119 A1 | 19 May 2004 |
| | | EP 1419119 B1 | 03 May 2006 |
| | | US 2005-0069592 A1 | 31 March 2005 |
| | | US 7192602 B2 | 20 March 2007 |
| | | WO 03-018495 A1 | 06 March 2003 |
| KR 10-2005-0094457 A | 27 September 2005 | CN 100323588 C | 04 July 2007 |
| | | CN 100741742 A | 01 March 2006 |
| | | JP 2004-262763 A | 24 September 2004 |
| | | JP 4388282 B2 | 24 December 2009 |
| | | KR 10-1081785 B1 | 09 November 2011 |
| | | TW 200418741 A | 01 October 2004 |
| | | TW I325853 B | 11 June 2010 |
| | | US 2006-0127498 A1 | 15 June 2006 |
| | | US 7514093 B2 | 07 April 2009 |
| | | WO 2004-064524 A1 | 05 August 2004 |
| JP 2017-025120 A | 02 February 2017 | CN 106255727 A | 21 December 2016 |
| | | CN 106255727 B | 15 June 2021 |
| | | EP 3138880 A1 | 08 March 2017 |
| | | EP 3138880 A4 | 15 November 2017 |
| | | JP 2017-166858 A1 | 20 April 2017 |
| | | JP 6481685 B2 | 13 March 2019 |
| | | WO 2015-166858 A1 | 05 November 2015 |
| JP 2006-520311 A | 07 September 2006 | CN 100753840 A | 29 March 2006 |
| | | US 2006-0142413 A1 | 29 June 2006 |
| | | WO 2004-076369 A2 | 10 September 2004 |
| | | WO 2004-076369 A3 | 31 March 2005 |
| JP 2021-143318 A | 24 September 2021 | None | |

Form PCT/ISA/210 (patent family annex) (July 2022)